(19) Europäisches Patentamt
European Patent Office
Office européen des brevets

(11) **EP 4 576 606 A1**

(12) **EUROPEAN PATENT APPLICATION**
published in accordance with Art. 153(4) EPC

(43) Date of publication:
**25.06.2025 Bulletin 2025/26**

(21) Application number: **23896027.2**

(22) Date of filing: **30.06.2023**

(51) International Patent Classification (IPC):
**H04B 10/079** (2013.01)

(52) Cooperative Patent Classification (CPC):
**H04B 10/079; H04B 10/25; H04Q 11/00**

(86) International application number:
**PCT/CN2023/105312**

(87) International publication number:
**WO 2024/113864 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2022 CN 202211521725**

(71) Applicant: **Huawei Technologies Co., Ltd.
Shenzhen, Guangdong 518129 (CN)**

(72) Inventor: **LI, Haojiang
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **OPTICAL FIBER DISTANCE MEASUREMENT METHOD AND DEVICE**

(57)    Embodiments of this application provide an optical fiber ranging method and device, to accurately measure a length of an optical fiber between an ONU and an OLT by using an optical signal. The method according to embodiments of this application includes: The OLT obtains a first distance, where the first distance is a product of a latency of the OLT and/or a circuit latency of a first ONU and a first speed. The OLT sends at least two first ranging requests to the first ONU, and obtains responses to the at least two first ranging requests. The OLT calculates a distance between the OLT and the first ONU based on the first distance, the at least two first ranging requests, and the responses to the at least two first ranging requests. After the first distance is obtained, a ranging error caused by the latency of the OLT and/or the circuit latency of the first ONU may be eliminated by using the first distance. This improves precision of measuring the distance between the OLT and the ONU.

FIG. 1

## Description

This application claims priority to Chinese Patent Application No. CN202211521725.6, filed with the China National Intellectual Property Administration on November 30, 2022 and entitled "OPTICAL FIBER RANGING METHOD AND DEVICE", which is incorporated herein by reference in its entirety.

## TECHNICAL FIELD

Embodiments of this application relate to the communication field, and in particular, to an optical fiber ranging method and device.

## BACKGROUND

With popularization of high-speed networks, optical fibers have entered thousands of households, but fiber to the home is closely related with a passive optical network (passive optical network, PON) system. The PON system is a system in which an optical signal sent by an optical line terminal (optical line terminal, OLT) is transmitted to optical network units (optical network unit, ONU) over an optical distribution network (optical distribution network, ODN). The OLT is a provider-managed device, responsible for allocating data of an upper-layer service network to users. The ONUs are devices used by the users to connect to a network, responsible for receiving data sent by the OLT, and directly providing a service for the users.

Because the PON system is a multipoint-to-point topology in which a plurality of ONUs share a feeder optical fiber, to properly arrange uplink messages of the ONUs to ensure that slots for transferring the uplink messages of the ONUs on the feeder optical fiber do not overlap, distances between the ONUs and the OLT need to be learned of, to determine time needed for the uplink messages of the ONUs to arrive at the feeder optical fiber. After sending a ranging message to the ONU, the OLT receives a response message sent by the ONU, and calculates the distance between the OLT and the ONU with reference to a propagation speed of light over an optical fiber based on an interval between time at which the ranging message is sent and time at which the response message is received.

The interval between the time at which the ranging message is sent and time at which the response message is received is subject to response duration of the ONU for processing the ranging message, while the response duration of the ONU for processing the ranging message is subject to a running status and a design of the ONU. Therefore, a length of an optical fiber between the ONU and the OLT cannot be accurately calculated based on the interval between the time at which the ranging message is sent and the time at which the response message is received.

## SUMMARY

Embodiments of this application provide an optical fiber ranging method and device, to accurately measure a length of an optical fiber between an ONU and an OLT by using an optical signal.

A first aspect of this application provides an optical fiber ranging method, including: An optical line terminal OLT obtains a first distance, where the first distance is a product of an inherent latency of the OLT and a first speed, and the first speed is a propagation speed of light over an optical fiber. The OLT sends a first ranging request to a first optical network unit ONU. The OLT obtains a second distance and a third distance, where the second distance is a product of a circuit latency of the first ONU and the first speed, and the third distance is a product of a signal processing latency of the first ONU and the first speed. The OLT obtains a response to the first ranging request, where the response is sent by the first ONU. The OLT calculates a distance between the OLT and the first ONU based on the first distance, the second distance, the third distance, the first ranging request, and the response to the first ranging request.

In this embodiment of this application, the OLT obtains the first distance, where the first distance is a product of the latency of the OLT and/or the circuit latency of the first ONU and the first speed. The OLT sends at least two first ranging requests to the first ONU, and obtains responses to the at least two first ranging requests. The OLT calculates the distance between the OLT and the first ONU based on the first distance, the at least two first ranging requests, and the responses to the at least two first ranging requests. After the first distance is obtained, a ranging error caused by the latency of the OLT and/or the circuit latency of the first ONU may be eliminated by using the first distance. This improves precision of measuring the distance between the OLT and the ONU.

In a possible implementation of the first aspect, that the OLT calculates a distance between the OLT and the first ONU based on the first distance, the second distance, the third distance, the first ranging request, and the response to the first ranging request includes: The OLT calculates a difference between time at which the first ranging request is sent and time at which the response to the first ranging request is obtained, to obtain first duration. The OLT calculates a product of the first duration and the first speed, to obtain a fourth distance. The OLT calculates a difference by subtracting the first distance, the second distance, and the third distance from the fourth distance, to obtain the distance between the OLT and the first ONU.

In this embodiment of this application, the OLT calculates the distance between the OLT and the first ONU based on the first distance, the second distance, the third distance, the first ranging request, and the response to the first ranging request. Specifically, the first duration may be obtained by calculating the difference between the time at which the first ranging request is sent and the time at which the response to the first ranging request is obtained. The OLT calculates the product of the first duration and the first speed, to obtain the fourth distance. The OLT calculates the difference by subtracting the first distance, the second distance, and the third distance from the fourth distance, to obtain the distance between the OLT and the first ONU. The distance between the OLT and the first ONU is obtained by calculating propagation time of an optical signal over an optical fiber, obtaining the fourth distance through calculation based on the first duration of optical signal transmission, and then calculating the difference by subtracting the first distance, the second distance, and the third distance from the fourth distance. Interference caused by the first distance, the second distance, and the third distance to the distance between the OLT and the first ONU is eliminated, thereby improving the precision of measuring the distance between the OLT and the first ONU.

In a possible implementation of the first aspect, the first ranging request carries an identity of the first ONU, and the second distance and the third distance have correspondences with the identity of the first ONU. That the OLT obtains a second distance and a third distance includes: The OLT obtains the second distance and the third distance based on the identity of the first ONU and the correspondences between the second distance and the identity of the first ONU and between the third distance and the identity of the first ONU.

In this embodiment of this application, the first ranging request carries the identity of the first ONU, and the second distance and the third distance that have the correspondences with the identity of the first ONU are obtained based on the identity of the first ONU. The second distance and the third distance that have the correspondences with the identity of the first ONU are selected, based on the identity of the first ONU, from a distance list stored in the OLT. This improves utilization efficiency of storage in the OLT.

In a possible implementation of the first aspect, the method further includes: The OLT obtains an optical signal sent by a first end of the first ONU, where the optical signal carries an optical fiber identifier. The OLT calculates a topology structure of a passive optical network PON based on the distance between the OLT and the first ONU and the optical fiber identifier, where the PON includes the OLT and the first ONU.

In this embodiment of this application, in the method, after obtaining the optical signal sent by the first end of the first ONU, the OLT may further calculate the topology structure of the PON based on the distance between the OLT and the first ONU and the optical fiber identifier. The PON includes the OLT and the first ONU, and the optical signal carries the optical fiber identifier. After the distance between the first ONU and the OLT is calculated, an optical fiber identifier of an optical fiber between the first end of the first ONU and the OLT is learned of by using the optical signal sent by the first end of the ONU, and a topology relationship of the PON is calculated by using the optical fiber identifier and the distance between the first ONU and the OLT. The topology structure of the PON is learned of efficiently and accurately without manual configuration or check, thereby improving working efficiency of the PON.

In a possible implementation of the first aspect, the PON further includes a second ONU. In this embodiment of this application, the PON may include the second ONU. The PON may include a plurality of ONUs, to improve utilization efficiency of the PON.

In a possible implementation of the first aspect, the method further includes: The OLT sends a first detection signal to the first ONU, where the first detection signal is used to detect whether a path between the OLT and the first ONU is reachable. The OLT sends a second detection signal to the second ONU, where the second detection signal is used to detect whether a path between the OLT and the second ONU is reachable. The OLT obtains a response signal of the first detection signal, where the response signal is sent by the first ONU. If the distance between the OLT and the first ONU is less than a distance between the OLT and the second ONU, the OLT determines, based on the response signal of the first detection signal, that a fault occurs on a feeder between the first ONU and the second ONU or a distribution on which the second ONU is located. If the distance between the OLT and the first ONU is greater than or equal to a distance between the OLT and the second ONU, the OLT determines, based on the response signal of the first detection signal, that a fault occurs on a distribution on which the second ONU is located.

In this embodiment of this application, the OLT further sends the first detection signal to the first ONU, where the first detection signal is used to detect whether the path between the OLT and the first ONU is reachable. The OLT sends the second detection signal to the second ONU, where the second detection signal is used to detect whether the path between the OLT and the second ONU is reachable. If the path between the first ONU and the OLT is reachable, the OLT obtains the response signal that is of the first detection signal and that is sent by the first ONU. If the distance between the first ONU and the OLT is less than the distance between the second ONU and the OLT, because no corresponding signal that is of the second detection signal and that is sent by the second ONU is received, the OLT determines that a fault occurs on the feeder between the first ONU and the second ONU or the distribution on which the second ONU is located. If the distance between the OLT and the first ONU is greater than or equal to the distance between the OLT and the second ONU, the OLT determines that a fault occurs on the distribution on which the second ONU is located. In this way, the topology structure of the PON is calculated by measuring a distance between each ONU and the OLT in the PON by using the optical fiber ranging method, and network diagnosis is performed on the PON based on a detection signal and the calculated topology structure of the PON. This simplifies network diagnosis of the PON and improves reliability of the PON.

A second aspect of this application provides an optical fiber ranging device, including:

an obtaining unit, configured to obtain a first distance, where the first distance is a product of an inherent latency of an OLT and a first speed, and the first speed is a propagation speed of light over an optical fiber;

a sending unit, configured to send a first ranging request to a first optical network unit ONU, where the obtaining unit is further configured to obtain a second distance and a third distance, where the second distance is a product of a circuit latency of the first ONU and the first speed, and the third distance is a product of a signal processing latency of the first ONU and the first speed; and

the obtaining unit is further configured to obtain a response to the first ranging request, where the response is sent by the first ONU; and

a calculating unit, configured to calculate a distance between the OLT and the first ONU based on the first distance, the second distance, the third distance, the first ranging request, and the response to the first ranging request.

In a possible implementation of the second aspect, the calculating unit is specifically configured to:

calculate a difference between time at which the first ranging request is sent and time at which the response to the first ranging request is obtained, to obtain first duration;

calculate a product of the first duration and the first speed, to obtain a fourth distance; and

calculate a difference by subtracting the first distance, the second distance, and the third distance from the fourth distance, to obtain the distance between the OLT and the first ONU.

In a possible implementation of the second aspect, the first ranging request carries an identity of the first ONU, and the second distance and the third distance have correspondences with the identity of the first ONU.

The obtaining unit is specifically configured to obtain the second distance and the third distance based on the identity of the first ONU and the correspondences between the second distance and the identity of the first ONU and between the third distance and the identity of the first ONU.

In a possible implementation of the second aspect, the obtaining unit is further configured to obtain an optical signal sent by a first end of the first ONU, where the optical signal carries an optical fiber identifier.

The calculating unit is further configured to calculate a topology structure of a passive optical network PON based on the distance between the OLT and the first ONU and the optical fiber identifier, where the PON includes the OLT and the first ONU.

In a possible implementation of the second aspect, the PON further includes a second ONU.

In a possible implementation of the second aspect, the sending unit is further configured to send a first detection signal to the first ONU, where the first detection signal is used to detect whether a path between the OLT and the first ONU is reachable.

The sending unit is further configured to send a second detection signal to the second ONU, where the second detection signal is used to detect whether a path between the OLT and the second ONU is reachable.

The obtaining unit is further configured to obtain a response signal of the first detection signal, where the response signal is sent by the first ONU.

The device further includes a determining unit, configured to: if the distance between the OLT and the first ONU is less than a distance between the OLT and the second ONU, determine, based on the response signal of the first detection signal, that a fault occurs on a feeder between the first ONU and the second ONU or a distribution on which the second ONU is located.

The determining unit is further configured to: if the distance between the OLT and the first ONU is greater than or equal to the distance between the OLT and the second ONU, determine, based on the response signal of the first detection signal, that a fault occurs on the distribution on which the second ONU is located.

A third aspect of embodiments of this application provides an optical fiber ranging device, including a processor and a memory. The memory is configured to store instructions. The processor is configured to execute the instructions. When the processor executes the instructions, the method in the first aspect or any one of the possible implementations of the first aspect is performed.

A fourth aspect of embodiments of this application provides a computer-readable storage medium, including a program. When the program is run on a computer, the computer is enabled to perform the method according to the first aspect or any one of the possible implementations of the first aspect.

A fifth aspect of embodiments of this application provides a computer program product including instructions. When the computer program product runs on a computer, the computer is enabled to perform the method according to the first aspect or any one of the possible implementations of the first aspect.

## BRIEF DESCRIPTION OF DRAWINGS

FIG. 1 is a schematic flowchart of an optical fiber ranging method according to an embodiment of this application;

FIG. 2 is a diagram of a correspondence between a model of an ONU and a compensation distance for a circuit latency according to an embodiment of this application;

FIG. 3a is a diagram of a distribution of compensation distances for signal processing latencies of a first ONU according to an embodiment of this application;

FIG. 3b is a diagram of another distribution of compensation distances for signal processing latencies of a first ONU according to an embodiment of this application;

FIG. 4 is another schematic flowchart of an optical fiber ranging method according to an embodiment of this application;

FIG. 5 is a diagram of a topology structure of a PON according to an embodiment of this application;

FIG. 6 is another schematic flowchart of an optical fiber ranging method according to an embodiment of this application;

FIG. 7 is another diagram of a topology structure of a PON according to an embodiment of this application;

FIG. 8 is a diagram of a structure of an optical fiber ranging device according to an embodiment of this application; and

FIG. 9 is a diagram of another structure of an optical fiber ranging device according to an embodiment of this application.

## DESCRIPTION OF EMBODIMENTS

The following describes embodiments of the present invention with reference to accompanying drawings in embodiments of the present invention. Terms used in embodiments of the present invention are merely intended to explain specific embodiments of the present invention, and are not intended to limit the present invention. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances. This is merely a discrimination manner that is used when objects having a same attribute are described in embodiments of this application. In addition, the terms "include", "have", and any other variants are intended to cover the non-exclusive inclusion, so that a process, method, system, product, or device that includes a series of units is not necessarily limited to those units, but may include other units not expressly listed or inherent to such a process, method, product, or device.

With popularization of high-speed networks, optical fibers have entered thousands of households, but fiber to the home is closely related with a PON system.

The PON system is a system in which an optical signal sent by an OLT is transmitted to ONUs over an ODN. The OLT is a provider-managed device, responsible for allocating data of an upper-layer service network to users. The ONUs are devices used by the users to connect to a network, responsible for receiving data sent by the OLT, and directly providing a service for the users.

Because the PON system is a multipoint-to-point topology in which a plurality of ONUs share a feeder optical fiber, to properly arrange uplink messages of the ONUs to ensure that slots for transferring the uplink messages of the ONUs on the feeder optical fiber do not overlap, distances between the ONUs and the OLT need to be learned of, to determine time needed for the uplink messages of the ONUs to arrive at the feeder optical fiber. After sending a ranging message to the ONU, the OLT receives a response message sent by the ONU, and calculates the distance between the OLT and the ONU with reference to a propagation speed of light over an optical fiber based on an interval between time at which the ranging message is sent and time at which the response message is received.

The interval between the time at which the ranging message is sent and the time at which the response message is received is not exactly time of propagating the optical signal over the optical fiber, and the interval includes signal processing time of the OLT, the time of propagating the optical signal over the optical fiber, and signal processing time of the ONU. Therefore, a length of an optical fiber between the ONU and the OLT cannot be accurately calculated based on the interval between the time at which the ranging message is sent and the time at which the response message is received.

According to this application, the signal processing time of the OLT and the signal processing time of the ONU may be calculated and pre-stored in the OLT. The signal processing time of the ONU includes an internal circuit latency and a signal processing latency of the ONU. Different models of different ONU devices have different internal circuit latencies and signal processing latencies. Therefore, corresponding to brand-specific model-specific ONUs, compensation distances for internal circuit latencies of the ONU devices and compensation distances for signal processing latencies of the ONU devices need to be maintained in an OLT system. After sending a ranging request to the ONU, the OLT obtains a calculation distance between the OLT and the ONU through calculation based on the ranging request and a feedback message that is for the ranging request and that is fed back by the ONU, and then obtains the distance between the OLT and the ONU by subtracting, from the calculation distance between the OLT and the ONU, a compensation distance for an inherent latency of the OLT, a compensation distance for the internal circuit latency of the ONU device, and a compensation distance for the signal processing latency of the ONU device that are stored in the OLT.

The following describes the solutions provided in embodiments of this application with reference to the accompanying drawings.

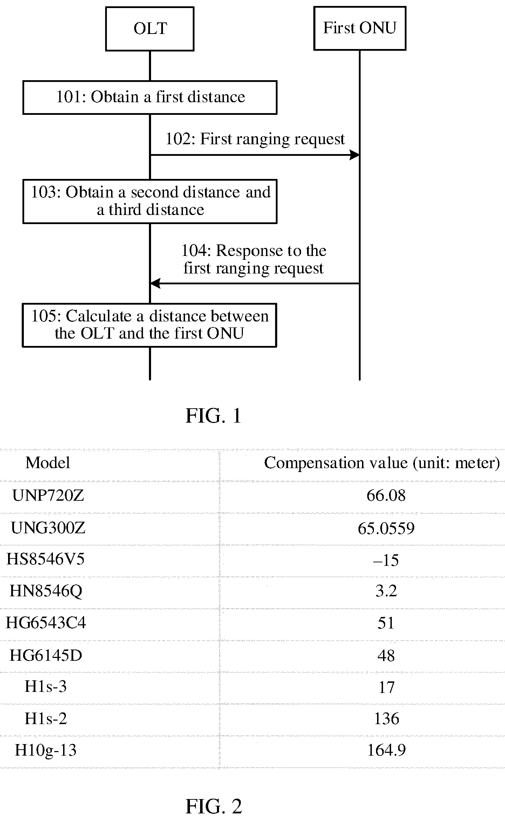

FIG. 1 is a schematic flowchart of an optical fiber ranging method according to an embodiment of this application.

101: An OLT obtains a first distance.

When performing ranging on a first ONU, the OLT obtains the first distance, where the first distance is a compensation distance that is for an inherent latency of the OLT that is preset in the OLT, the first distance is a product of the inherent latency of the OLT and a first speed, and the first speed is a propagation speed of light over an optical fiber.

It should be noted that there is no definite sequence of step 101 to step 104, provided that step 102 is performed before step 104. In actual application, a sequence of step 101 to step 104 should be set with reference to a specific application scenario. This is not limited herein.

102: The OLT sends a first ranging request to the first ONU.

When performing the ranging on the first ONU, the OLT sends the first ranging request to the first ONU. For example, the OLT may deliver a ranging request message to the first ONU, to trigger the first ONU to send a response message of the first ranging request to the OLT.

It may be understood that the description that the first ranging request is the ranging request message herein is merely an example. In actual application, the OLT sends the first ranging request to the first ONU with reference to a specific application scenario. This is not limited herein.

It should be noted that there is no definite sequence of step 101 to step 104, provided that step 102 is performed before step 104. In actual application, the sequence of step 101 to step 104 should be set with reference to the specific application scenario. This is not limited herein.

103: The OLT obtains a second distance and a third distance.

When the OLT performs the ranging on the first ONU, the OLT obtains the second distance and the third distance that are pre-stored in the OLT, where the second distance is a product of a circuit latency of the first ONU and the first speed, that is, distance compensation for the circuit latency of the first ONU, and the third distance is a product of a signal processing latency of the first ONU and the first speed, that is, distance compensation for the signal processing latency of the first ONU.

For example, the OLT may pre-store a diagram of a potential correspondence between a model of an ONU and a compensation distance for a circuit latency corresponding to the model of the ONU in a PON system, and a diagram of a potential correspondence between the model of the ONU and a compensation distance for a signal processing latency corresponding to the model of the ONU in the PON system. The diagram of the correspondence between the model of the ONU and the compensation distance for the circuit latency is used as an example. FIG. 2 is a diagram of a correspondence between a model of an ONU and a compensation distance for a circuit latency according to an embodiment of this application.

It may be learned from FIG. 2 that the compensation distance of the circuit latency corresponding to a model UNP720Z of the ONU is 66.08 m, the compensation distance of the circuit latency corresponding to a model UNG300Z of the ONU is 65.0559 m, the compensation distance of the circuit latency corresponding to a model HS8546V5 of the ONU is -15 m, ..., and the compensation distance of the circuit latency corresponding to a model H10g-13 of the ONU is 164.9 m.

Based on a model of the first ONU, the OLT searches the diagram of the correspondence between the model of the ONU and the compensation distance for the circuit latency to obtain the second distance, and searches the diagram of the correspondence between the model of the ONU and the compensation distance for the signal processing latency to obtain the third distance.

It may be understood that the description of the diagram of the correspondence between the model of the ONU and the compensation distance for the circuit latency herein is merely an example. In actual application, the model of the ONU and the compensation distance for the circuit latency may alternatively be stored in another form in the OLT. This is not limited herein.

It should be noted that there is no definite sequence of step 101 to step 104, provided that step 102 is performed before step 104. In actual application, the sequence of step 101 to step 104 should be set with reference to the specific application scenario. This is not limited herein.

104: The OLT obtains a response to the first ranging request, where the response is sent by the first ONU.

After sending the first ranging request, the OLT obtains the response, sent by the first ONU, to the first ranging request.

It should be noted that there is no definite sequence of step 101 to step 104, provided that step 102 is performed before step 104. In actual application, the sequence of step 101 to step 104 should be set with reference to the specific application scenario. This is not limited herein.

105: The OLT calculates a distance between the OLT and the first ONU.

After obtaining the first distance, the second distance, the third distance, the first ranging request, and the response to the first ranging request, the OLT calculates the distance between the OLT and the first ONU based on the first distance, the second distance, the third distance, the first ranging request, and the response to the first ranging request.

For example, the OLT calculates a difference between time at which the first ranging request is sent and time at which the response to the first ranging request is obtained, to obtain first duration. The OLT calculates a product of the first duration and the first speed to obtain a fourth distance. The OLT calculates a difference by subtracting the first distance, the second distance, and the third distance from the fourth distance, to obtain the distance between the OLT and the first ONU.

Refer to the following formula:

$$L = \frac{1}{2}\left(t * v - l_1 - l_2 - l_3\right)$$

t is the first duration, v is the first speed, $l_1$ is the first distance, $l_2$ is the second distance, $l_3$ is the third distance, and L is the distance between the OLT and the first ONU.

It may be understood that a manner, proposed in this application, in which the OLT pre-stores the first distance, the second distance, and the third distance for subsequent use is merely an example. In actual application, the OLT may alternatively pre-store the inherent latency of the OLT, the circuit latency of the first ONU, and the signal processing latency of the first ONU. This is not limited herein.

In this embodiment of this application, the OLT calculates the distance between the OLT and the first ONU based on the first distance, the second distance, the third distance, the first ranging request, and the response to the first ranging request. Specifically, the first duration may be obtained by calculating the difference between the time at which the first ranging request is sent and the time at which the response to the first ranging request is obtained. The OLT calculates the product of the first duration and the first speed to obtain the fourth distance. The OLT calculates the difference by subtracting the first distance, the second distance, and the third distance from the fourth distance to obtain the distance between the OLT and the first ONU. The distance between the OLT and the first ONU is obtained by calculating propagation time of an optical signal over an optical fiber, obtaining the fourth distance through calculation based on the first duration of optical signal transmission, and then calculating the difference by subtracting the first distance, the second distance, and the third distance from the fourth distance. Interference caused by the first distance, the second distance, and the third distance to the distance between the OLT and the first ONU is eliminated, thereby improving precision of measuring the distance between the OLT and the first ONU.

In this embodiment of this application, the OLT obtains the first distance, where the first distance is a product of the latency of the OLT and/or the circuit latency of the first ONU and the first speed. The OLT sends at least two first ranging requests to the first ONU, and obtains responses to the at least two first ranging requests. The OLT calculates the distance between the OLT and the first ONU based on the first distance, the at least two first ranging requests, and the responses to the at least two first ranging requests. After the first distance is obtained, a ranging error caused by the latency of the OLT and/or the circuit latency of the first ONU may be eliminated by using the first distance. This improves the precision of measuring the distance between the OLT and the ONU.

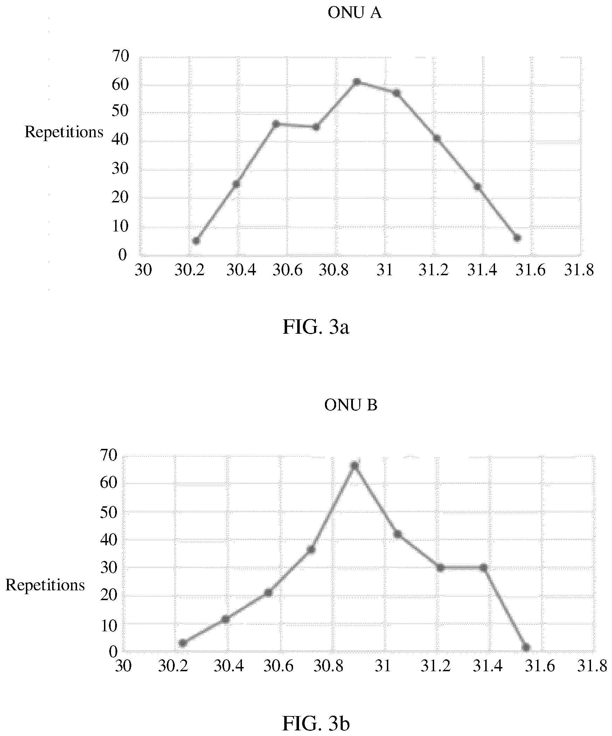

In the foregoing optical fiber ranging method, because signal processing latencies of the first ONU are inconsistent during different times of ranging, it is found, by performing a plurality of times of ranging and analysis for the fourth distance, the first distance, the second distance, and the distance between the OLT and the first ONU, that the third distance complies with the Gaussian distribution to some extent. Therefore, technical personnel may perform a plurality of times of ranging on a first ONU of a same model, and learn of the third distance based on results of the plurality of times of ranging. Specifically, FIG. 3a is a diagram of a distribution of compensation distances for signal processing latencies of a first ONU according to an embodiment of this application, and FIG. 3b is a diagram of another distribution of compensation distances for signal processing latencies of a first ONU according to an embodiment of this application.

A plurality of optical fiber ranging experiment tests are performed by using an ONU A and an ONU B. A distribution of compensation distances for signal processing latencies obtained through calculation based on data collected by the ONU A is shown in FIG. 3a. It may be learned from FIG. 3a that the distribution of the compensation distances for signal processing latencies of the ONU A complies with the Gaussian distribution. A distribution of compensation distances for signal processing latencies obtained through calculation based on data collected by the ONU B is shown in FIG. 3b. It may be learned from FIG. 3b that the distribution of the compensation distances for signal processing latencies of the ONU B also approximately complies with the Gaussian distribution. After several attempts, it is found that a distribution of compensation distances for signal processing latencies of an ONU approximately complies with the Gaussian distribution. Therefore, a distribution curve of the compensation distances for signal processing latencies of the ONU may be fitted by using compensation distances for signal processing latencies obtained through calculation in a plurality of ranging experiments. Then, data about the compensation distances for signal processing latencies of the ONU in a confidence interval is obtained based on a fitted Gaussian curve, to calculate an average value of the data, in other words, the compensation distances for signal processing latencies of the ONU.

It may be understood that the description of calculating the average value of the data about the compensation distances for signal processing latencies of the ONU in the confidence interval herein is merely an example. In actual application, the confidence interval should be selected based on an actual situation, and calculation is performed on data based on the actual situation in an averaging manner after the data is obtained; or weighted averaging calculation may be performed on data after the data is obtained. This is not limited herein.

The method described in FIG. 1 may be further applied to a plurality of different application scenarios. The following describes the solutions provided in this application with reference to different application scenarios.

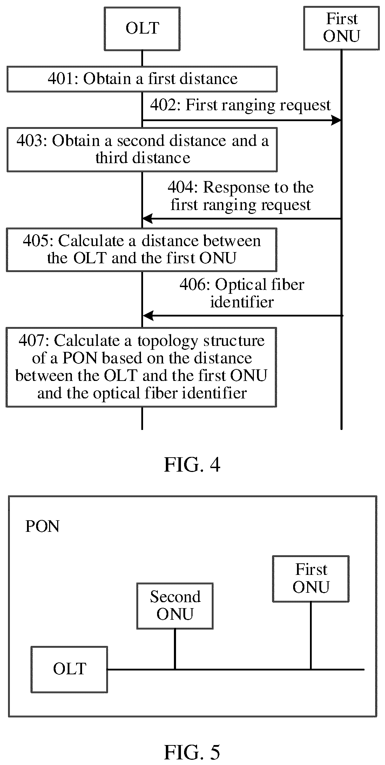

For example, because a PON system may change continuously, a structure change of the PON system may be learned of in time by periodically performing detection and scanning on the PON system, for better network management by using a structure of the PON system. According to this application, a topology structure of the PON system may be calculated by an OLT based on an obtained distance between the OLT and a first ONU. For specific execution steps, refer to FIG. 4. FIG. 4 is another schematic flowchart of an optical fiber ranging method according to an embodiment of this application.

401: An OLT obtains a first distance.

402: The OLT sends a first ranging request to a first ONU.

403: The OLT obtains a second distance and a third distance.

404: The OLT obtains a response to the first ranging request, where the response is sent by the first ONU.

405: The OLT calculates a distance between the OLT and the first ONU.

Specific implementations of step 401 to step 405 are similar to those of step 101 to step 105 in FIG. 1. Details are not described herein again. Refer to the descriptions of step 101 to step 105 in FIG. 1.

406: The OLT obtains an optical fiber identifier sent by a first end of the first ONU.

The OLT obtains an optical signal sent by the first end of the first ONU, where the optical signal carries the optical fiber identifier, and the OLT identifies a connection relationship between the first end of the first ONU and the OLT based on the optical fiber identifier in the optical signal.

407: The OLT calculates a topology structure of a PON based on the distance between the OLT and the first ONU and the optical fiber identifier.

After performing ranging on the first ONU and a second ONU and obtaining the optical fiber identifier, the OLT calculates the topology structure of the PON based on a correspondence between ranging results of the first ONU and the second ONU and the optical fiber identifier.

For example, FIG. 5 is a diagram of a topology structure of a PON according to an embodiment of this application.

It may be learned from FIG. 5 that the PON includes an OLT, a first ONU, and a second ONU, where the OLT provides a service for the first ONU and the second ONU, and a distance between the OLT and the first ONU is greater than or equal to a distance between the OLT and the second ONU. Because a common optical fiber line exists between the first ONU and the second ONU, the topology structure of the PON is shown in FIG. 5.

It may be understood that the description of the topology structure of the PON herein is merely an example. In actual application, the PON may include one OLT and at least one ONU. In the case that the PON includes two or more ONUs, a distance relationship between the two or more ONUs and the OLT and a length of an optical fiber line part shared by the two or more ONUs are not limited.

In this embodiment of this application, in the method, after obtaining the optical signal sent by the first end of the first ONU, the OLT may further calculate the topology structure of the PON based on the distance between the OLT and the first ONU and the optical fiber identifier. The PON includes the OLT and the first ONU, and the optical signal carries the optical fiber identifier. After the distance between the first ONU and the OLT is calculated, an optical fiber identifier of an optical fiber between the first end of the first ONU and the OLT is learned of by using the optical signal sent by the first end of the ONU, and a topology relationship of the PON is calculated by using the optical fiber identifier and the distance between the first ONU and the OLT. The topology structure of the PON is learned of efficiently and accurately without manual configuration or check, thereby improving working efficiency of the PON.

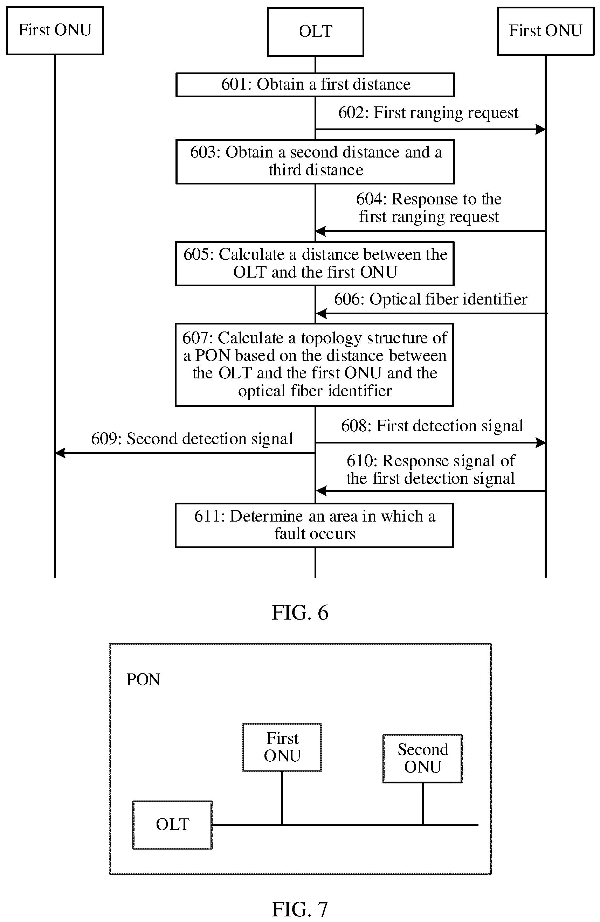

For example, in a network structure of a PON system, one OLT usually manages a plurality of ONUs. In such a network structure, if faults may occur in the OLT, the plurality of ONUs, and lines between the OLT and the plurality of ONUs, engineer personnel performs routine check and maintenance, which brings high maintenance costs. For how to reduce manpower and material resources in the engineer personnel's routine check while ensuring running security of the PON system, this application provides that whether a fault exists in the PON and a specific faulty area may be determined based on the calculated topology structure of the PON, a signal sent by the OLT to the ONU, and an obtained feedback. For a specific implementation, refer to FIG. 6. FIG. 6 is another schematic flowchart of an optical fiber ranging method according to an embodiment of this application.

601: An OLT obtains a first distance.

602: The OLT sends a first ranging request to a first ONU.

603: The OLT obtains a second distance and a third distance.

604: The OLT obtains a response to the first ranging request, where the response is sent by the first ONU.

605: The OLT calculates a distance between the OLT and the first ONU.

606: The OLT obtains an optical fiber identifier sent by a first end of the first ONU.

607: The OLT calculates a topology structure of a PON based on the distance between the OLT and the first ONU and the optical fiber identifier.

Specific implementations of step 601 to step 607 are similar to those of step 401 to step 407 in FIG. 4. Details are not described herein again. Refer to the descriptions of step 401 to step 407 in FIG. 4.

608: The OLT sends a first detection signal to the first ONU.

After completing calculation of the topology structure of the PON once, the OLT sends the first detection signal to the first ONU, where the first detection signal is used to detect whether a path between the OLT and the first ONU is reachable.

It should be noted that there is no definite sequence of step 608 to step 610, provided that step 608 is performed before step 610. In actual application, a sequence of step 608 to step 610 may be based on an actual situation. This is not limited herein.

609: The OLT sends a second detection signal to a second ONU.

After completing the calculation of the topology structure of the PON once, the OLT sends the second detection signal to the second ONU, where the second detection signal is used to detect whether a path between the OLT and the second ONU is reachable.

It should be noted that there is no definite sequence of step 608 to step 610, provided that step 608 is performed before step 610. In actual application, the sequence of step 608 to step 610 may be based on the actual situation. This is not limited herein.

610: The OLT obtains a response signal of the first detection signal, where the response signal is sent by the first ONU.

After sending the first detection signal to the first ONU, the OLT obtains the response signal, sent by the first ONU, of the first detection signal. Therefore, no fault exists in an optical path from the first ONU to the OLT.

It should be noted that there is no definite sequence of step 608 to step 610, provided that step 608 is performed before step 610. In actual application, the sequence of step 608 to step 610 may be based on the actual situation. This is not limited herein.

611: The OLT determines a faulty area.

When the OLT obtains the response signal, sent by the first ONU, of the first detection signal, but does not obtain a response signal of the second detection signal within preset time, the ONT determines, based on the distance between the OLT and the first ONU and a distance between the OLT and the second ONU, the faulty area.

In the case that the distance between the OLT and the first ONU is less than the distance between the OLT and the second ONU, the topology structure of the PON is shown in FIG. 7. FIG. 7 is another diagram of a topology structure of a PON according to an embodiment of this application. An OLT determines, based on the topology structure of the PON and a response signal of a first detection signal, that a fault occurs on a feeder between a first ONU and a second ONU or a distribution on which the second ONU is located.

It may be learned from FIG. 7 that the PON includes the OLT, the first ONU, and the second ONU, where the OLT provides a service for the first ONU and the second ONU, and a distance between the OLT and the first ONU is less than a distance between the OLT and the second ONU. Because a common optical fiber line exists between the first ONU and the second ONU, the topology structure of the PON is shown in FIG. 7.

In the case that the distance between the OLT and the first ONU is greater than or equal to the distance between the OLT and the second ONU, the topology structure of the PON is shown in FIG. 5, and the OLT determines, based on the topology structure of the PON and the response signal of the first detection signal, that a fault occurs on a distribution on which the first ONU and the second ONU are located.

It should be noted that the method for determining a faulty area by the OLT herein is based on the topology structure of the PON. In actual application, the OLT should determine the faulty area with reference to a specific network topology relationship. In addition, descriptions that the OLT sends a detection signal and obtains a response signal of the detection signal that is sent by an ONU herein are examples. In actual application, there is also a case in which each detection signal sent by the OLT has a corresponding response signal. In this case, no fault exists in the PON. Specific operations are not described herein.

In this embodiment of this application, the OLT further sends the first detection signal to the first ONU, where the first detection signal is used to detect whether the path between the OLT and the first ONU is reachable. The OLT sends the second detection signal to the second ONU, where the second detection signal is used to detect whether the path between the OLT and the second ONU is reachable. If the path between the first ONU and the OLT is reachable, the OLT obtains the response signal, sent by the first ONU, of the first detection signal. If the distance between the first ONU and the OLT is less than the distance between the second ONU and the OLT, because no corresponding signal that is of the second detection signal and that is sent by the second ONU is received, the OLT determines that a fault occurs on the feeder between the first ONU and the second ONU or the distribution on which the second ONU is located. If the distance between the OLT and the first ONU is greater than or equal to the distance between the OLT and the second ONU, the OLT determines that a fault occurs on the distribution on which the second ONU is located. In this way, the topology structure of the PON is calculated by measuring a distance between each ONU and the OLT in the PON by using an optical fiber ranging method, and network diagnosis is performed on the PON based on the calculated topology structure of the PON and the detection signal. This simplifies network diagnosis of the PON and improves reliability of the PON.

The foregoing describes the method provided in embodiments of this application with reference to examples. The following describes a device provided in embodiments of this application with reference to the accompanying drawings.

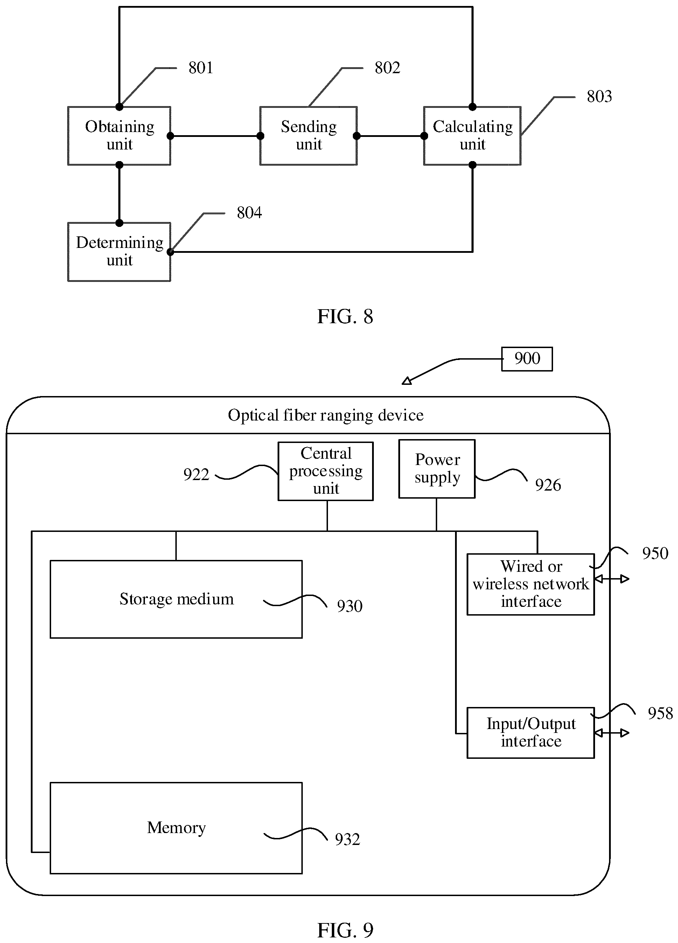

FIG. 8 is a diagram of a structure of an optical fiber ranging device according to an embodiment of this application.

The optical fiber ranging device includes:

an obtaining unit 801, configured to obtain a first distance, where the first distance is a product of an inherent latency of an OLT and a first speed, and the first speed is a propagation speed of light over an optical fiber;
a sending unit 802, configured to send a first ranging request to a first optical network unit ONU, where the obtaining unit 801 is further configured to obtain a second distance and a third distance, where the second distance is a product of a circuit latency of the first ONU and the first speed, and the third distance is a product of a signal processing latency of the first ONU and the first speed; and
the obtaining unit 801 is further configured to obtain a response to the first ranging request, where the response is sent by the first ONU; and
a calculating unit 803, configured to calculate a distance between the OLT and the first ONU based on the first distance, the second distance, the third distance, the first ranging request, and the response to the first ranging request.

Optionally, the calculating unit 803 is specifically configured to:
calculate a difference between time at which the first ranging request is sent and time at which the response to the first ranging request is obtained, to obtain first duration; calculate a product of the first duration and the first speed, to obtain a fourth distance; and calculate a difference by subtracting the first distance, the second distance, and the third distance from the fourth distance, to obtain the distance between the OLT and the first ONU.

Optionally, the first ranging request carries an identity of the first ONU, and the second distance and the third distance have correspondences with the identity of the first ONU.

The obtaining unit 801 is specifically configured to obtain the second distance and the third distance based on the identity of the first ONU and the correspondences between the second distance and the identity of the first ONU and between the third distance and the identity of the first ONU.

Optionally, the obtaining unit 801 is further configured to obtain an optical signal sent by a first end of the first ONU, where the optical signal carries an optical fiber identifier.

The calculating unit 803 is further configured to calculate a topology structure of a passive optical network PON based on the distance between the OLT and the first ONU and the optical fiber identifier, where the PON includes the OLT and the first ONU.

Optionally, the PON further includes a second ONU.

Optionally, the sending unit 802 is further configured to send a first detection signal to the first ONU, where the first detection signal is used to detect whether a path between the OLT and the first ONU is reachable.

The sending unit 802 is further configured to send a second detection signal to the second ONU, where the second detection signal is used to detect whether a path between the OLT and the second ONU is reachable.

The obtaining unit 801 is further configured to obtain a response signal of the first detection signal, where the response signal is sent by the first ONU.

The device further includes a determining unit 804, configured to: if the distance between the OLT and the first ONU is less than a distance between the OLT and the second ONU, determine, based on the response signal of the first detection signal, that a fault occurs on a feeder between the first ONU and the second ONU or a distribution on which the second ONU is located.

The determining unit 804 is further configured to: if the distance between the OLT and the first ONU is greater than or equal to the distance between the OLT and the second ONU, determine, based on the response signal of the first detection signal, that a fault occurs on the distribution on which the second ONU is located.

For beneficial effects of data processing in the foregoing designs of this application, refer to the beneficial effects of the implementations in the foregoing data processing embodiments. Details are not described herein again.

It should be noted that content such as information exchange and an execution process between the modules/units described in the embodiment corresponding to FIG. 8 is based on a same concept as the method embodiment for reading data or writing data in this application. For specific content, refer to the descriptions in the foregoing method embodiments of this application. Details are not described herein again.

The following describes an optical fiber ranging device according to an embodiment of this application. FIG. 9 is a diagram of another structure of an optical fiber ranging device according to an embodiment of this application.

The optical fiber ranging device 900 is configured to implement a function performed in FIG. 1, FIG. 4, or FIG. 6. Specifically, the optical fiber ranging device 900 is implemented by one or more servers, and the optical fiber ranging device 900 may differ greatly due to different configurations or performance, may include one or more central processing units (central processing units, CPUs) 922 (for example, one or more central processing units), a memory 932, and one or more storage media 930 (for example, one or more storage devices). The memory 932 and the storage medium 930 may be transitory storage or persistent storage. A program stored in the storage medium 930 may include one or more modules (not shown in the figure), and each module may include a series of instruction operations performed on the optical fiber ranging device 900. Further, the central processing unit 922 may be configured to communicate with the storage medium 930, to perform, on the optical fiber ranging device 900, the series of instruction operations in the storage medium 930.

The optical fiber ranging device 900 may further include one or more power supplies 926, one or more wired or wireless network interfaces 950, and/or one or more input/output interfaces 958.

In this embodiment of this application, the central processing unit 922 is configured to perform the method in the embodiment corresponding to FIG. 1, FIG. 4, or FIG. 6. For example, the central processing unit 922 may be used by an optical line terminal OLT to: obtain a first distance, where the first distance is a product of an inherent latency of the OLT and a first speed, and the first speed is a propagation speed of light over an optical fiber; send a first ranging request to a first optical network unit ONU; obtain a second distance and a third distance, where the second distance is a product of a circuit latency of the first ONU and the first speed, and the third distance is a product of a signal processing latency of the first ONU and the first speed; obtain a response to the first ranging request, where the response is sent by the first ONU; and calculate a distance between the OLT and the first ONU based on the first distance, the second distance, the third distance, the first ranging request, and the response to the first ranging request.

It should be noted that the central processing unit 922 may be further configured to perform any step in the method embodiment corresponding to FIG. 1, FIG. 4, or FIG. 6 in this application. For specific content, refer to the descriptions in the foregoing method embodiments of this application. Details are not described herein again.

An embodiment of this application further provides a computer-readable storage medium, including computer-readable instructions. When the computer-readable instructions are run on a computer, the computer is enabled to perform any one of the implementations described in the foregoing method embodiments.

An embodiment of this application further provides a computer program product. The computer program product includes a computer program or instructions. When the computer program or instructions are run on a computer, the computer is enabled to perform any one of the implementations described in the foregoing method embodiments.

This application further provides a chip or a chip system. The chip may include a processor. The chip may further include a memory (or a storage module) and/or a transceiver (or a communication module), or the chip is coupled to a memory (or a storage module) and/or a transceiver (or a communication module). The transceiver (or the communication module) may be configured to support the chip in performing wired and/or wireless communication. The memory (or the storage module) may be configured to store a program or a group of instructions. The processor may invoke the program or the group of instructions to implement operations performed by the terminal or the network device in any one of the foregoing method embodiments or the possible implementations of the method embodiments. The chip system may include the chip, or may include the chip and another discrete device, such as the memory (or the storage module) and/or the transceiver (or the communication module).

It may be clearly understood by a person skilled in the art that, for a purpose of convenient and brief description, for a detailed working process of the foregoing system, apparatus, and unit, refer to a corresponding process in the foregoing method embodiments. Details are not described herein again.

In some embodiments according to this application, it should be understood that the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product.

The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

**Claims**

1. An optical fiber ranging method, comprising:

    obtaining, by an optical line terminal OLT, a first distance, wherein the first distance is a product of an inherent latency of the OLT and a first speed, and the first speed is a propagation speed of light over an optical fiber;
    sending, by the OLT, a first ranging request to a first optical network unit ONU;
    obtaining, by the OLT, a second distance and a third distance, wherein the second distance is a product of a circuit latency of the first ONU and the first speed, and the third distance is a product of a signal processing latency of the first ONU and the first speed;
    obtaining, by the OLT, a response to the first ranging request, wherein the response is sent by the first ONU; and
    calculating, by the OLT, a distance between the OLT and the first ONU based on the first distance, the second distance, the third distance, the first ranging request, and the response to the first ranging request.

2. The method according to claim 1, wherein the calculating, by the OLT, a distance between the OLT and the first ONU based on the first distance, the second distance, the third distance, the first ranging request, and the response to the first ranging request comprises:

    calculating, by the OLT, a difference between time at which the first ranging request is sent and time at which the response to the first ranging request is obtained, to obtain first duration;
    calculating, by the OLT, a product of the first duration and the first speed, to obtain a fourth distance; and
    calculating, by the OLT, a difference by subtracting the first distance, the second distance, and the third distance from the fourth distance, to obtain the distance between the OLT and the first ONU.

3. The method according to claim 1 or 2, wherein the first ranging request carries an identity of the first ONU, and the second distance and the third distance have correspondences with the identity of the first ONU; and

    the obtaining, by the OLT, a second distance and a third distance comprises:
    obtaining, by the OLT, the second distance and the third distance based on the identity of the first ONU and the correspondences between the second distance and the identity of the first ONU and between the third distance and the identity of the first ONU.

4. The method according to any one of claims 1 to 3, wherein the method further comprises:

    obtaining, by the OLT, an optical signal sent by a first end of the first ONU, wherein the optical signal carries an optical fiber identifier; and
    calculating, by the OLT, a topology structure of a passive optical network PON based on the distance between the OLT and the first ONU and the optical fiber identifier, wherein the PON comprises the OLT and the first ONU.

5. The method according to any one of claims 1 to 4, wherein the PON further comprises a second ONU.

6. The method according to claim 5, wherein the method further comprises:

    sending, by the OLT, a first detection signal to the first ONU, wherein the first detection signal is used to detect whether a path between the OLT and the first ONU is reachable;
    sending, by the OLT, a second detection signal to the second ONU, wherein the second detection signal is used to detect whether a path between the OLT and the second ONU is reachable;
    obtaining, by the OLT, a response signal of the first detection signal, wherein the response signal is sent by the first ONU; and
    if the distance between the OLT and the first ONU is less than a distance between the OLT and the second ONU, determining, by the OLT based on the response signal of the first detection signal, that a fault occurs on a feeder between the first ONU and the second ONU or a distribution on which the second ONU is located; or
    if the distance between the OLT and the first ONU is greater than or equal to a distance between the OLT and the second ONU, determining, by the OLT based on the response signal of the first detection signal, that a fault occurs on a distribution on which the second ONU is located.

7. An optical fiber ranging device, comprising:

an obtaining unit, configured to obtain a first distance, wherein the first distance is a product of an inherent latency of an OLT and a first speed, and the first speed is a propagation speed of light over an optical fiber;
a sending unit, configured to send a first ranging request to a first optical network unit ONU, wherein
the obtaining unit is further configured to obtain a second distance and a third distance, wherein the second distance is a product of a circuit latency of the first ONU and the first speed, and the third distance is a product of a signal processing latency of the first ONU and the first speed; and
the obtaining unit is further configured to obtain a response to the first ranging request, wherein the response is sent by the first ONU; and
a calculating unit, configured to calculate a distance between the OLT and the first ONU based on the first distance, the second distance, the third distance, the first ranging request, and the response to the first ranging request.

8. The device according to claim 7, wherein the calculating unit is specifically configured to:

calculate a difference between time at which the first ranging request is sent and time at which the response to the first ranging request is obtained, to obtain first duration;
calculate a product of the first duration and the first speed, to obtain a fourth distance; and
calculate a difference by subtracting the first distance, the second distance, and the third distance from the fourth distance, to obtain the distance between the OLT and the first ONU.

9. The device according to claim 7 or 8, wherein the first ranging request carries an identity of the first ONU, and the second distance and the third distance have correspondences with the identity of the first ONU; and
the obtaining unit is specifically configured to obtain the second distance and the third distance based on the identity of the first ONU and the correspondences between the second distance and the identity of the first ONU and between the third distance and the identity of the first ONU.

10. The device according to any one of claims 7 to 9, wherein the obtaining unit is further configured to obtain an optical signal sent by a first end of the first ONU, wherein the optical signal carries an optical fiber identifier; and
the calculating unit is further configured to calculate a topology structure of a passive optical network PON based on the distance between the OLT and the first ONU and the optical fiber identifier, wherein the PON comprises the OLT and the first ONU.

11. The device according to any one of claims 7 to 10, wherein the PON further comprises a second ONU.

12. The device according to claim 11, wherein the sending unit is further configured to send a first detection signal to the first ONU, wherein the first detection signal is used to detect whether a path between the OLT and the first ONU is reachable;

the sending unit is further configured to send a second detection signal to the second ONU, wherein the second detection signal is used to detect whether a path between the OLT and the second ONU is reachable;
the obtaining unit is further configured to obtain a response signal of the first detection signal, wherein the response signal is sent by the first ONU;
the device further comprises a determining unit, configured to: if the distance between the OLT and the first ONU is less than a distance between the OLT and the second ONU, determine, based on the response signal of the first detection signal, that a fault occurs on a feeder between the first ONU and the second ONU or a distribution on which the second ONU is located; and
the determining unit is further configured to: if the distance between the OLT and the first ONU is greater than or equal to the distance between the OLT and the second ONU, determine, based on the response signal of the first detection signal, that a fault occurs on the distribution on which the second ONU is located.

13. An optical fiber ranging device, comprising a processor and a memory, wherein the memory is configured to store instructions, the processor is configured to execute the instructions, and when the processor executes the instructions, the method according to any one of claims 1 to 6 is performed.

14. A computer-readable storage medium, comprising a program, wherein when the program is run on a computer, the computer is enabled to perform the method according to any one of claims 1 to 6.

15. A computer program product comprising instructions, wherein when the computer program product runs on a computer, the computer is enabled to perform the method according to any one of claims 1 to 6.

FIG. 1

| Model | Compensation value (unit: meter) |
| --- | --- |
| UNP720Z | 66.08 |
| UNG300Z | 65.0559 |
| HS8546V5 | –15 |
| HN8546Q | 3.2 |
| HG6543C4 | 51 |
| HG6145D | 48 |
| H1s-3 | 17 |
| H1s-2 | 136 |
| H10g-13 | 164.9 |

FIG. 2

ONU A

FIG. 3a

ONU B

FIG. 3b

| OLT | | First ONU |
|---|---|---|

401: Obtain a first distance

402: First ranging request

403: Obtain a second distance and a third distance

404: Response to the first ranging request

405: Calculate a distance between the OLT and the first ONU

406: Optical fiber identifier

407: Calculate a topology structure of a PON based on the distance between the OLT and the first ONU and the optical fiber identifier

FIG. 4

PON

First ONU

Second ONU

OLT

FIG. 5

| First ONU | | OLT | | First ONU |
|---|---|---|---|---|

601: Obtain a first distance

602: First ranging request

603: Obtain a second distance and a third distance

604: Response to the first ranging request

605: Calculate a distance between the OLT and the first ONU

606: Optical fiber identifier

607: Calculate a topology structure of a PON based on the distance between the OLT and the first ONU and the optical fiber identifier

608: First detection signal

609: Second detection signal

610: Response signal of the first detection signal

611: Determine an area in which a fault occurs

FIG. 6

PON

First ONU

Second ONU

OLT

FIG. 7

```
                                    801                    802
        ┌──────────────────────────┐      ┌──────────┐
        │                          │      │          │              803
   ┌────┴─────┐        ┌──────────┐│      ┌──────────┐
   │ Obtaining│        │ Sending  │       │Calculating│
   │   unit   │────────│   unit   │───────│   unit    │
   └────┬─────┘        └──────────┘       └──────────┘
        │                                              │
   ┌────┴──────┐          804                          │
   │Determining│                                       │
   │   unit    │───────────────────────────────────────┘
   └───────────┘
```

FIG. 8

FIG. 9

## INTERNATIONAL SEARCH REPORT

| International application No. |
|---|
| **PCT/CN2023/105312** |

### A. CLASSIFICATION OF SUBJECT MATTER

H04B10/079(2013.01)i

According to International Patent Classification (IPC) or to both national classification and IPC

### B. FIELDS SEARCHED

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT, ENTXTC, DWPI: 测距, 处理, 电路, 固有, 距离, 时间, 时延, 信号处理, 延迟, 延时, OLT, ONU, ranging, processing, circuitry, intrinsic, range, time, latency, signal processing, delay

### C. DOCUMENTS CONSIDERED TO BE RELEVANT

| Category* | Citation of document, with indication, where appropriate, of the relevant passages | Relevant to claim No. |
|---|---|---|
| X | CN 101383692 A (HITACHI INFORMATION & TELECOMMUNICATION ENGINEERING, LTD.) 11 March 2009 (2009-03-11) description, page 19, 2nd-to-last paragraph to page 24, 3rd-to-last paragraph, and figures 13-18 | 1-15 |
| A | CN 101290213 A (HUAWEI TECHNOLOGIES CO., LTD.) 22 October 2008 (2008-10-22) entire document | 1-15 |
| A | CN 101557539 A (HUAWEI TECHNOLOGIES CO., LTD.) 14 October 2009 (2009-10-14) entire document | 1-15 |
| A | CN 111866627 A (XINHE SEMICONDUCTOR TECHNOLOGY (WUXI) CO., LTD.) 30 October 2020 (2020-10-30) entire document | 1-15 |
| A | US 2009162064 A1 (MIZUTANI, M. et al.) 25 June 2009 (2009-06-25) entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 September 2023** | **12 September 2023** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/105312**

| Patent document cited in search report | | | Publication date (day/month/year) | Patent family member(s) | | | Publication date (day/month/year) |
|---|---|---|---|---|---|---|---|
| CN | 101383692 | A | 11 March 2009 | JP | 2009065443 | A | 26 March 2009 |
| | | | | EP | 2043287 | A2 | 01 April 2009 |
| | | | | US | 2013077633 | A1 | 28 March 2013 |
| | | | | US | 2009067850 | A1 | 12 March 2009 |
| CN | 101290213 | A | 22 October 2008 | US | 2009010642 | A1 | 08 January 2009 |
| | | | | WO | 2008128478 | A1 | 30 October 2008 |
| | | | | AT | 499761 | T | 15 March 2011 |
| | | | | DE | 602008005075 | D1 | 07 April 2011 |
| | | | | EP | 2040397 | A1 | 25 March 2009 |
| CN | 101557539 | A | 14 October 2009 | WO | 2009124484 | A1 | 15 October 2009 |
| CN | 111866627 | A | 30 October 2020 | None | | | |
| US | 2009162064 | A1 | 25 June 2009 | JP | 2009152914 | A | 09 July 2009 |
| | | | | CN | 101466052 | A | 24 June 2009 |
| | | | | EP | 2073565 | A2 | 24 June 2009 |
| | | | | US | 2009162063 | A1 | 25 June 2009 |
| | | | | US | 2009162065 | A1 | 25 June 2009 |
| | | | | JP | 2009152915 | A | 09 July 2009 |
| | | | | JP | 2009152916 | A | 09 July 2009 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211521725